# EUROPEAN PATENT SPECIFICATION

(11) **EP 2 677 693 B1**
(45) Date of publication and mention of the grant of the patent: **11.03.2020**
(21) Application number: 11858984.5
(22) Date of filing: 14.12.2011
(51) Int. Cl.: H04L 12/40, H04L 29/12, G05B 19/05

(54) **COMMUNICATION SYSTEM**
KOMMUNIKATIONSSYSTEM
SYSTÈME DE COMMUNICATION

(30) Priority: 14.02.2011 JP 2011028089
(43) Date of publication of application: 25.12.2013
(73) Proprietor: Hitachi Industrial Equipment Systems Co., Ltd., Tokyo 101-0022 (JP)
(72) Inventor: MOCHIZUKI Yoshinori, Tokyo 100-8220 (JP); KOIZUMI Minoru, Tokyo 100-8220 (JP); TAKAHASHI Ichiro, Tokyo 100-8220 (JP)
(74) Representative: Mewburn Ellis LLP
(86) International application number: PCT/JP2011/078901
(87) International publication number: WO 2012/111229

(56) References cited:
- WO-A1-2005/015844
- WO-A2-2009/136724
- JP-A- 6 006 352
- JP-A- 6 232 882
- JP-A- 11 285 085
- JP-A- H06 232 882
- JP-A- 2006 135 868

## Description

### TECHNICAL FIELD

The present invention pertains to a method of transferring data to devices under control that are connected with a programmable logic controller (PLC).

### BACKGROUND ART

A programmable logic controller (below called "PLC") is a device that executes a sequence program and performs sequence control of connected control devices. In a PLC such as this, there are connected a plurality of I/O modules via a bus in the main part of a PLC incorporated in a CPU (central processing unit) module. The main part of the PLC, by executing a sequence program by means of the incorporating CPU module, e.g. carries out a data transmission request with respect to an I/O module and the I/O module transmits data acquired by an input device to the CPU module as a response to the request.

In a device control system to which the present invention is applicable, the CPU module and a plurality of I/O modules are connected with the PLC, via the bus. There are respectively connected, with each of the plurality of I/O modules, devices under control (below called "controlled devices").

Data transmission and reception between I/O modules and controlled devices is carried out utilizing a serial communication protocol. In particular, as serial communication protocol specifications associated with an FA (Factory Automation) network, there are Modbus®, CC-Link®, and the like.

Serial communication protocols such as Modbus and CC-Link support unicast communication in which a master device transmits requests to each of the slave devices and broadcast communication in which a request is transmitted to all the slave devices present in a network. As a result, broadcast communication is valid in the case where an identical request is transmitted to all slave devices present in the network, but in the case of carrying out multicast communication in which requests are transmitted to a plurality of devices, there is a need to carry out unicast communication to each of the devices.

Further, in serial communication protocols, there is not embedded any mechanism to detect and avoid collisions. As a result, in the case where an identical request is transmitted to a plurality of the slave devices present in the network, the master device having transmitted the request to the slave devices is temporarily unable to transmit a request to other devices until receiving responses from the slave devices having received the request. In particular, in the case where devices with different processing speeds are present in the network, or in the case where there are devices present that cannot transmit due to a malfunction or the like, there is the issue that a very great amount of time is needed until the requests to the plurality of slave devices have reached completion.

As means of solving the aforementioned issue, there are the method of setting in advance the timing at which slave devices transmit responses with respect to a request from the master device (refer to Patent Literature 1 and Patent Literature 2) and the method in which a slave device having transmitted a response to a request of the master device transmits a signal to the device being due to subsequently transmit a response (refer to Patent Literature 3).

### CITATION LIST

### PATENT LITERATURE

Patent Literature 1: JP-A-2010-21866
Patent Literature 2: JP-A-2007-60400
Patent Literature 3: JP-A-2007-166043

WO2009/136724 discloses a device and method for multicast in wireless local access networks.

### SUMMARY OF INVENTION

### TECHNICAL PROBLEM

However, in the prior art, there are the below-mentioned problems.

Since it is possible, by utilizing the technology of Patent Literature 1 as well as Patent Literature 2, to set different values among the slave devices for the timing of transmitting responses, it becomes possible to carry out multicast communication. However, in order to implement the foregoing, there is a need to carry out in advance time synchronization between the master device and the slave devices, so there is the issue that it is necessary to incorporate a mechanism of carrying out time synchronization in the slave devices. In the technology of Patent Literature 3, in order to determine the slave device being due to transmit a response subsequently by a slave device having transmitted a response, there is no need to incorporate a mechanism like time synchronization, but there is the issue that each slave device needs to know in advance information about the slave device being due to subsequently transmit a response.

Accordingly, the present invention provides technology that, together with not taking time synchronization to be necessary and without each slave device knowing in advance address information about the other slave devices, is capable of carrying out command transmission and responses to this commands with multicast communication.

### SOLUTION TO PROBLEM

The present invention provides a communication system as set forth in claim 1. The present invention also provides a controller effectuating communication with a plurality of controlled devices as set forth in claim 6. The present invention also provides a controlled device as set forth in claim 8.

### ADVANTAGEOUS EFFECTS OF INVENTION

It becomes possible to carry out multicast communication capable of transmitting responses and the time needed for the master device to transmit a request to a plurality of slave devices can be shortened.

Other objects, features, and advantages of the present invention should become clear from the description, pertaining to the accompanying drawings, of the below-mentioned embodiments of the present invention.

### BRIEF DESCRIPTION OF DRAWINGS

Fig. 1 is a diagram illustrating by example a configuration of a device control system to which the present invention is applied.
Fig. 2A is a diagram showing a configuration example of a CPU module.
Fig. 2B is a diagram showing a configuration example of an I/O module.
Fig. 2C is a diagram showing a configuration example of an inverter.
Fig. 3 is a diagram illustrating by example the configuration of device management table.
Fig. 4 is a diagram illustrating by example a flowchart at the time of switching on the PLC power supply.
Fig. 5 is a diagram illustrating by example a sequence of acquiring device information.
Fig. 6 is a diagram illustrating by example the basic operation sequence of a PLC associated with multicast communication.
Fig. 7 is a diagram illustrating by example an exception sequence of a PLC associated with multicast communication.
Fig. 8 is a diagram illustrating by example an exception sequence of a PLC associated with multicast communication.
Fig. 9 is a diagram illustrating by example a message frame of a serial communication protocol.

### DESCRIPTION OF EMBODIMENTS

Hereinafter, there will be given a description in detail of the embodiments of the present invention, on the basis of the drawings. Further, in the drawings describing the embodiments of the present invention, like reference numerals are used to designate like parts and repeated description thereof is taken to be omitted.

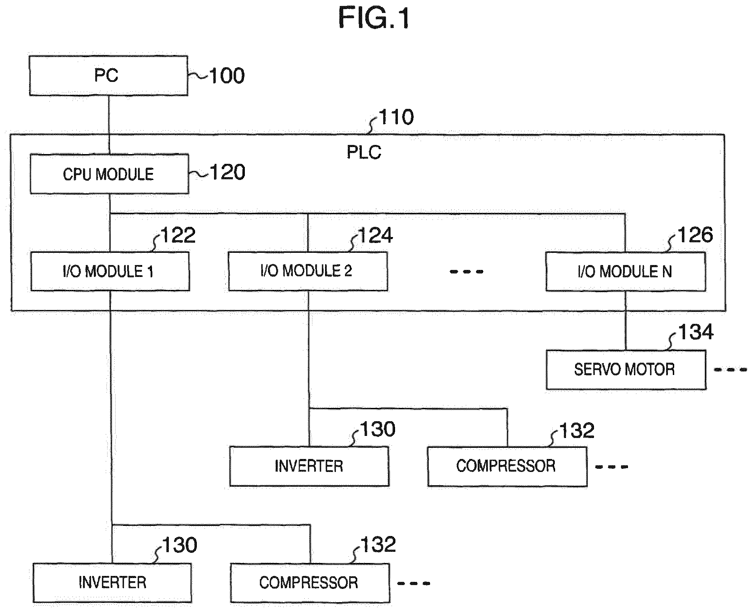

Fig. 1 is a diagram showing an example of a device control system associated with an embodiment of the present invention. In a PLC 110 shown in Fig. 1, a CPU module 120 and a plurality of I/O modules 122, 124, and 126 are connected with a bus 112. I/O modules 122, 124, and 126 are connected with devices under control (below called "controlled devices") such as an inverter 130, a compressor 142, and a servo motor 134. Between I/O modules 122, 124, and 126 and inverter 130, compressor 142, and servo motor 134 which are controlled devices, data transmission and reception is carried out utilizing a serial communication protocol. In particular, as a specification of a serial communication protocol associated with an FA network, it is possible to utilize Modbus®, CC-Link®, or the like.

A device control system is a system configured by including PC (Personal Computer) 100, PLC (Programmable Logic Controller) 110, and controlled devices such as inverter 130, compressor 132, and servo motor 134, an FA network system or the like e.g. being applicable thereto.

For data transmission and reception between PLC 110 and controlled devices such as inverter 130, compressor 132, and servo motor 134, there is utilized serial communication. In particular, as specifications of serial communication protocols associated with an FA network, there are Modbus, CC-Link, and the like.

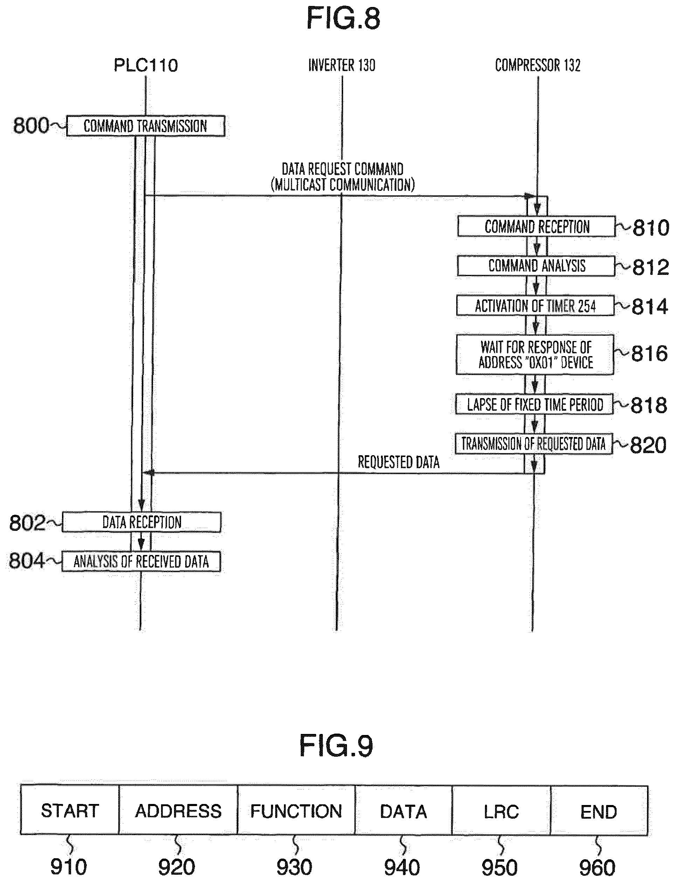

Fig. 9 is a diagram showing a message frame of Modbus which is one serial communication protocol standard.

A Modbus message frame is composed of a START field 910, and ADDRESS field 920, a FUNCTION field 930, a DATA field 940, an LRC field 950, and an END field 960. Further, when it comes to Modbus message frames, there are two types of message frame, the ASCII (American Standard Code for Information Interchange) mode and the RTU (Remote Terminal Unit) mode, but in the present invention, only the case of the ASCII mode will be described.

START field 910 is a field indicating the beginning of the message frame, "0x3A" being set therein.

ADDRESS field 920 is a field setting the transmission destination address of the message frame. In the case of Modbus, "0x00" is an address meant for broadcast communication, other values being addresses meant for unicast communication.

FUNCTION field 930 is a field setting a function code. A function code is a code indicating request contents on the occasion of the master device's transmitting a request to a slave device.

DATA field 940 is a field setting, by the master device as well as slave devices, data in accordance with the function code set in FUNCTION field 930.

LRC field 950 is a field setting an error check code on the basis of the LRC (Longitudinal Redundancy Check) method.

END field 960 is a field indicating the end of the message frame, "0x0D" and "0x0A" being set therein.

This concludes the description of a MODBUS message frame. Further, if what is concerned is a communication protocol with which the master device carries out broadcast communication as well as unicast communication with respect to slave devices, it is possible to apply the present invention. Also, in the description below, Modbus will be described as a serial communication protocol.

PLC 110 is configured by including a CPU module 120 and a plurality of I/O modules 122, 124, and 126. CPU module 120 and the plurality of I/O modules 122, 124, and 126 are connected via bus 112. Controlled devices such as inverter 130, compressor 132, and servo motor 134 are connected with I/O modules 122, 124, and 126. Further, apart from CPU module 120 or I/O module 122, a module holding another function, such as a power supply module, a communication module, or a counter module, may be connected via bus 112. Further, in the description below, the master device is taken to be a PLC 110 and slave devices are taken to be controlled devices (an inverter 130, a compressor 132, a servo motor 134, and the like).

CPU module 120 executes a stored sequence program and is a module that controls connected controlled devices in sequence via the respective I/O modules.

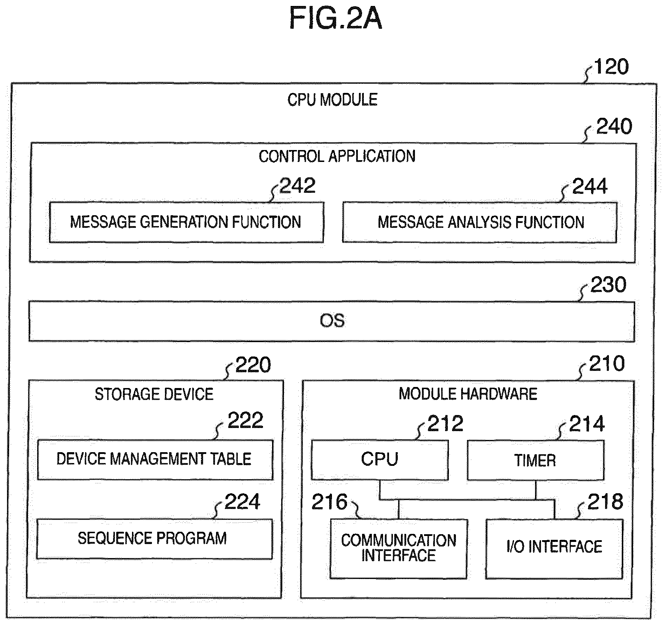

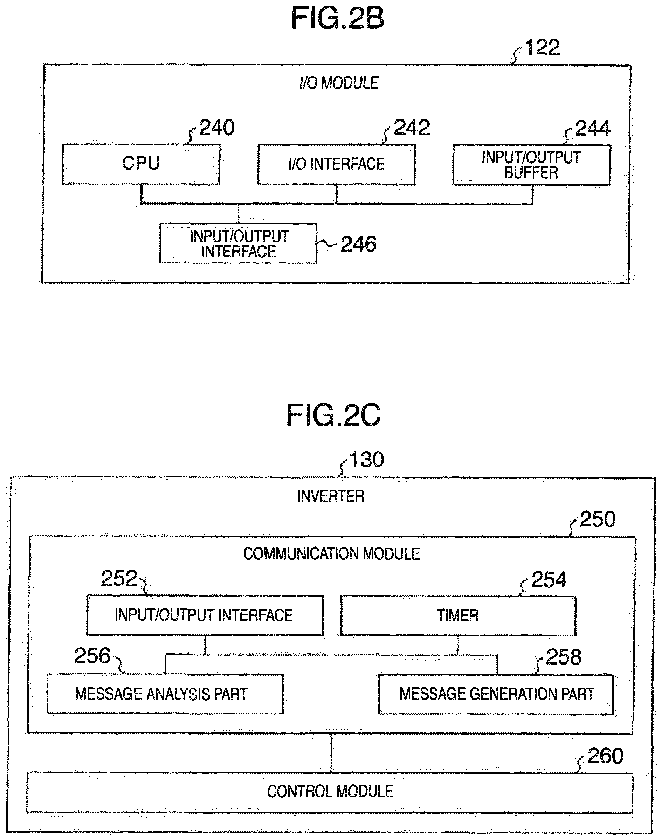

Fig. 2A shows CPU module 120, Fig. 2B shows I/O module122, and then, Fig. 2C shows an example of configuration of inverter 130.

CPU module 120 is configured by including module hardware 210, a storage device 220, an OS (Operating System) 230, and a device control application 240.

Module hardware 210 is hardware required for operating sequence program 226 of CPU module 120 and is configured by including a CPU 212, a timer 214, a communication interface 216, an I/O interface 218, and the like.

Communication interface 216 is an interface for carrying out data communication with PC 100 and it does matter if it is a serial interface connecting the respective I/O modules with the controlled devices, a wireless interface, or an Ethernet® interface.

I/O interface 218 is an interface connecting CPU module 120 and each of the I/O modules.

Storage device 220 saves data needed for the operation of CPU module 120, e.g. a sequence program 226 and a device management table 222, and is e.g. constituted by an intermediary such as a non-volatile semiconductor memory or a magnetic storage medium.

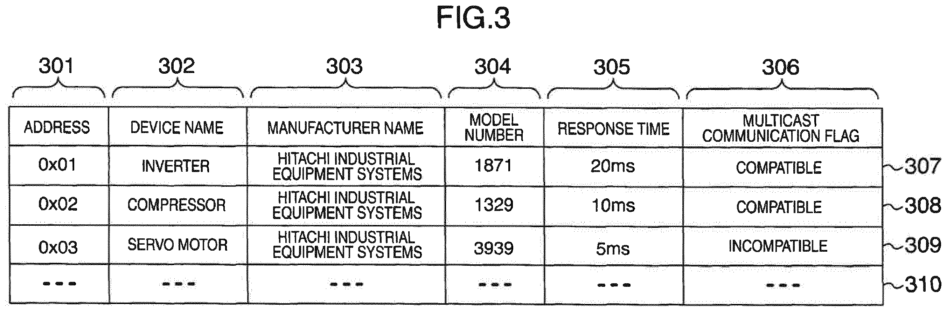

Fig. 3 is a diagram showing the details of device management table 222.

Device management table 222 is a table for saving information pertaining to controlled devices on which PLC 110 is carrying out control via the respective I/O modules, and is of a configuration including addresses 301, device names 302, manufacturer names 303, model numbers 304, response times 305, multicast communication flags 306, and the like.

Address 301 is an identifier uniquely identifying a controlled device managed under PLC 110 and is a value set in ADDRESS field 910.

Device type name 302 indicates the type of controlled device such as inverter, compressor, or servo motor.

In device management table 222, a configuration including information items pertaining to controlled devices, such as manufacturer names 303 and model numbers 304, is acceptable.

Response time 305 is the time from the PLC 110's transmitting requests to each of the controlled devices and until receiving responses from each of the controlled devices. Response time 305 may, apart from a value set in timer 214 as a timeout value on the occasion of activating timer 214 and awaiting responses from the concerned controlled devices after PLC 110 has transmitted a command to each of the controlled devices, be used a value that is looked up on the occasion that PLC 110 allocates addresses to each of the controlled devices. Further, utilizing response time 305 as a timeout value of timer 214 or as a look-up value is an example, it also being acceptable for the timeout value and the address to be set to predetermined values.

In a power supply activation sequence to be subsequently described, there are, as response time measurement methods, various methods such as:
the method of utilizing a device information request command transmitted by PLC 110 to each of the controlled devices and measuring a time of response to this command;
the method, regarding all the requests transmitted by PLC 110 to the devices under control, of measuring the response times thereto and finding out either the average value or the maximum value thereof; and the method in which PLC 110 transmits, to each of the controlled devices, a special command for measuring response times and measuring the times of response to this command. Further, in the below-mentioned description, it is assumed that response times are measured in methods utilizing device information request commands.

OS 230 is the basic software controlling the operation of CPU module 120 in a unified way.

Device control application 240 is an application carrying out control of controlled devices using sequence program 226 saved in storage device 220 via I/O interface 218 and is configured by including a message generation function 242 generating messages to be transmitted to each of the I/O modules via I/O interface 218 and a message analysis function 244 analyzing messages received from each of the I/O modules.

This concludes the example of a configuration of a CPU module 120.

Next, there will be described an example of the internal configuration of an I/O module 122.

I/O module 122 shown in Fig. 2B is configured by including CPU 240, an I/O interface 242, an input/output data buffer 244, and an input/output interface 246.

I/O module 242 is an interface connected with CPU module 120.

Input/output buffer 244 is an area storing messages to be transmitted and received via I/O interface 252.

Input/output interface 246 is an interface carrying out data communication with controlled devices connected with I/O module 122.

This concludes the example of the internal configuration of I/O module 122.

Next, there will be described, with reference to Fig. 2C, an example of the internal configuration of inverter 130.

Inverter 130 is configured by including a communication module 250 and a control module 260.

Communication module 250 is a module carrying out communication with PLC 110 via I/O module 122 and is configured by including an input/output interface 252, a timer 254, a message analysis par 256, and a message generation part 258.

Message analysis part 256 is a module analyzing messages transmitted by PLC 110 via I/O module 122.

Message generation part 258 is module generating messages to be transmitted to PLC 110 via I/O module 122.

Control module 260 is a module carrying out other operations than communication with PLC 110.

Further, in the present invention, a controlled device has been described taking inverter 130 as an example, but the other controlled devices, compressor 132 and servo motor 134, are taken to have the same configuration.

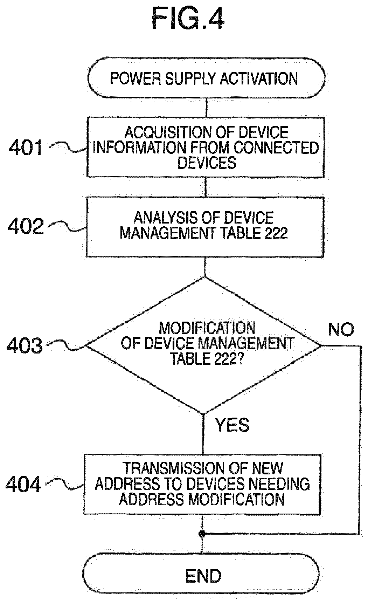

Fig. 4 is a diagram showing an example of a process flowchart at the time of switching on the power supply of PLC 110.

After switching on the power supply, PLC 110 acquires device information from all the controlled devices connected with the respective I/O modules (Step 401).

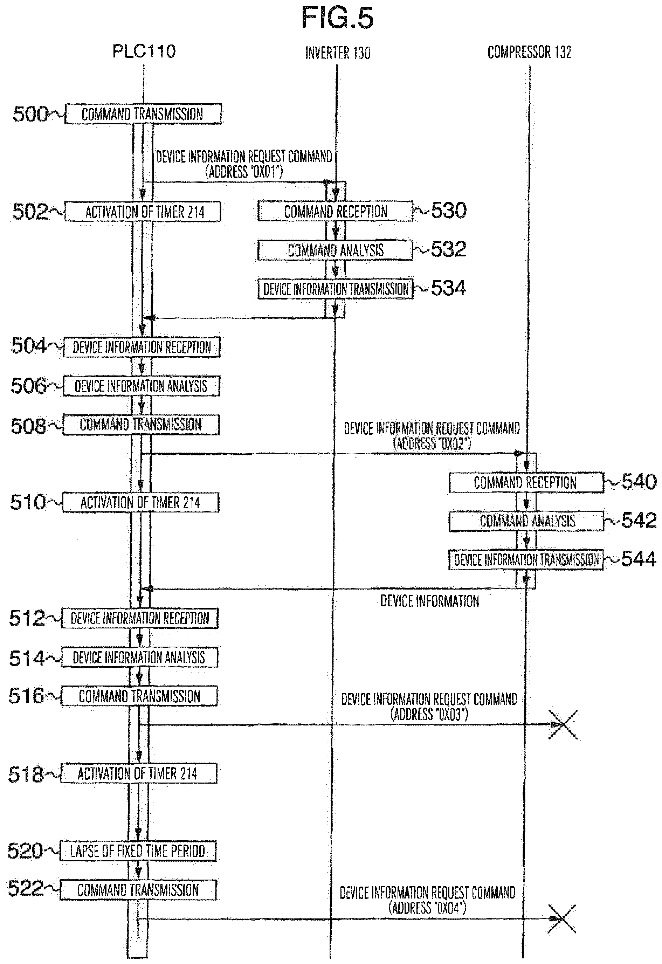

Fig. 5 is a diagram showing an example of the sequence of the process (Step 401 in Fig. 4) in which PLC 110, after switching on the power supply, acquires device information from the devices under control. Further, in the present invention, it is assumed that, prior to switching on the power supply, address "0x01" is already allocated to inverter 130 and address "0x02" to compressor 132.

PLC 110 transmits, via each of the I/O modules, an information request command for each device in which ADDRESS field 920 is set to "0x01" (Step 500). Further, in the case of Modbus, there corresponds, as a device information request command, "Report Slave ID (function code: 0x11)".

PLC 110, after having transmitted a command, activates timer 214 in order to measure the time up to receiving a response to the same command (Step 502).

Inverter 130, having received a command, analyzes the received command utilizing message analysis part 256 and, after having confirmed that its own address, "0x01", is set in ADDRESS field 920 as well as that the same command is a device information request command, transmits its own device information to PLC 110 as a response (Step 530, Step 532, and Step 534).

Device information is meant to include, apart from manufacturer name and model number, flags indicating whether or not the device is compatible with multicast communication according to the present invention.

PLC 110, having received device information, and after having analyzed the received device information utilizing message analysis function 244, makes a setting in device management table 222, together with the time elapsed until a response is returned, measured utilizing timer 214 (Step 504 and Step 506). If it is the case that the received message does not contain items as expected, it is acceptable to make an enquiry thereabout with PC 100 via communication interface 216.

Next, PLC 110 transmits, via each of the I/O modules, the information request command for each device in which ADDRESS field 920 is set to "0x02" (Step 508).

PLC 110, after having transmitted a command, activates timer 214 in order to measure the time up to receiving a response to the same command (Step 510).

Compressor 132, having received the command, analyzes the received command utilizing message analysis part 256 and, after having confirmed that its own address, "0x02", is set in ADDRESS field 920 as well as that the same command is a device information request command, transmits its own device information to PLC 110 as a response (Step 540, Step 542, and Step 544).

PLC 110, having received the device information, carries out the same processing as in Step 504 and Step 506 and transmits, via each of the I/O modules, an information request command for devices in which ADDRESS field 920 is set to "0x03" and activates timer 214 (Step 512, Step 514, Step 516, and Step 518). Further, since controlled devices holding an address "0x03" are not connected with PLC 110, no response is returned.

If PLC 110 confirms, utilizing timer 214, that no response is returned even if a fixed period of time has elapsed after a device information request command has been transmitted, it judges that no controlled device holding an address "0x03" is connected with PLC 110. Further, in the present invention, no statement is made regarding a retransmission mechanism, but it is acceptable to judge, after a plurality of retransmissions, that no controlled device having the same address is connected.

PLC 110 carries out the aforementioned sequence from address "0x01" up to "0xFF", generates device management table 222, as well as confirms non-existing addresses.

This concludes the description of the sequence in which PLC 110 acquires device information from each of the controlled devices.

The multicast communication in the present invention is implemented by means of a mechanism in which each of the controlled devices having received a multicast communication based frame from PLC 110 checks responses of other controlled devices flowng on the network and a device transmits its own address after confirming that the response from the controlled device holding an address immediately preceding its own address has flew on the network. As a result, there is a need to have the addresses of controlled devices capable of multicast communication to be chosen in consecutive order.

Accordingly, after transmitting a device information request command to all the addresses, the generated device management table 222 is analyzed and, as shown above, it is checked that the addresses of the controlled devices capable of multicast communication are consecutive (Step 402 and Step 403).

In the case where, as a result of the check, it is found that the same are not consecutive, there is transmitted (Step 404) an address modification request to devices for which an address modification is required in order for the addresses to become consecutive. Further, as an address setting method, there is, other than simply arranging the addresses in order to become consecutive, the method of arranging the addresses in the order of shorter response times first utilizing the response time, or the method of arranging the addresses in order by multicast communication type in order to handle plural multicast communications.

Further, if the addresses of the controlled devices capable of multicast communication are determined according to a prescribed rule, it is possible for each of the controlled devices to detect its own response order (response timing) according to the corresponding rule. In the present embodiment, there was determined the prescribed rule "the addresses of controlled devices capable of multicast communication have consecutive values", but this is an example and it does not matter if it is a separate rule.

This concludes the description of the PLC 110 flowchart after switching on the power supply. Further, the present operation may be carried out periodically at other times than after switching on the power supply. Also, for a brief time after generating device management table 22, it is acceptable, in the case where there are no modifications in the controlled devices connected with PLC 110, not to carry out the present operation at subsequent times of switching on the power supply.

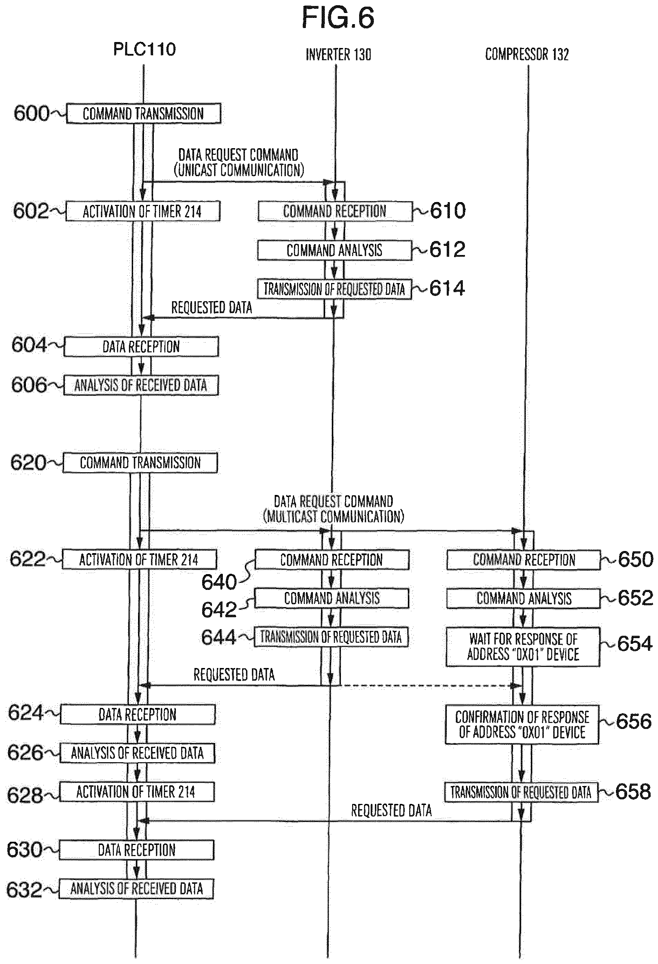

Fig. 6 is a diagram showing a basic sequence in the case where PLC 110 transmits a request command with respect to connected controlled devices.

First, there will be described the case where PLC 110 carries out a data request with respect to inverter 130 utilizing unicast communication.

PLC 110 transmits, via the I/O modules, a data request command in which ADDRESS field 920 is set to "0x01" (Step 600).

PLC 110, after having transmitted the command, activates timer 204 in order to measure the timeout period with respect to the request (Step 602).

Inverter 130, having received the command, analyzes the received command utilizing message analysis part 256, and, after checking that "0x01", its own address, is set in ADDRESS field 920 as well as that the same command is a data request command, transmits the data corresponding to the request to PLC 110 as a response (Step 610, Step 612, and Step 614).

PLC 110, having received the requested data, analyzes the received data utilizing message analysis function 244 (Step 604 and Step 606).

This concludes the description of a data communication sequence utilizing unicast communication.

Next, there will be described the case where PLC 110 carries out a data request to inverter 130 as well as compressor 132 utilizing multicast communication. Further, by PLC 110's setting specific values in ADDRESS field 920, FUNCTION field 930, DATA field 940, and the like, PLC 110 indicates that the frames to be transmitted are multicast communication. Also, it is acceptable, before carrying out multicast communication, to indicate, by broadcast communication to all the controlled devices, that what is concerned is multicast communication, by means of a method notifying that there will be brought a request meant for multicast communication. In the description below, it is assumed, by setting a specific value in ADDRESS field 920, that what is concerned is multicast communication.

PLC 110 transmits, via each of the I/O modules, a data request command in which "0xFE" is set in ADDRESS field 920, indicating that the present frame is multicast communication (Step 620).

PLC 110, after having transmitted the command, activates timer 214 in order to measure the timeout period with respect to the request (Step 622). At this point, the timeout value set in timer 214 is e.g. response time 305 of the device having the address with the lowest value, from among the devices registered in device management table 222 as devices capable of multicast communication.

Inverter 130, having received the command, analyzes the received command utilizing message analysis part 256 and, after having confirmed that it is necessary to return a response at first with respect to the request from the fact that address "OxFE", indicating multicast communication, is set in ADDRESS field 920, that the same command is a data request as well as that its own address is "0x01", transmits data matching the request to PLC 110 as a response with multicast communication (Step 640, Step 642, and Step 644). In the response, there is included as data identifying information (e.g. address 301) about the response transmission source controlled device.

PLC 110, having received the response from inverter 130, analyzes the received data utilizing message analysis function 244 and checks that data have been received from inverter 130. And then, PLC 110 activates timer 214 in order to receive data from the controlled device having address "0x02" that will next transmit a response (Step 624, Step 626, and Step 628). At this point, the timeout value set in timer 214 is e.g. response time 305 of the device having the address with the second lowest value, from among the devices registered in device management table 222 as devices capable of multicast communication.

Compressor 132, having received the command, analyzes the received command using message analysis part 256, confirms that there is a need to await a response to be transmitted by a controlled device having address "0x01" from the fact that address "OxFE", indicating multicast communication, is set in ADDRESS field 920, that the same command is a data request as wcll as that its own address is "0x02", and waits for the same response to be transmitted (Step 650, Step 652, and Step 654).

If compressor 132 detects a response multicast on the network, it analyzes this response utilizing message analysis part 256. And then, if it confirms that a controlled device having address "0x01" has transmitted a response, compressor 132 transmits, to PLC 110 as a response, data matching the request from PLC 110 (Step 656 and Step 658).

PLC 110, having received the response from compressor 132, analyzes the received message utilizing message analysis function 244 (Step 630 and Step 632).

This concludes the description of the basic communication sequence utilizing multicast communication.

By means of the method indicated in the foregoing, it becomes possible to carry out multicast communication without carrying out complex processing such as time synchronization between devices. However, in the case where a response cannot be transmitted due e.g. to the fact that inverter 130 has a malfunction or the like, there arises the issue that a controlled device having a higher address than inverter 130 cannot return a response. Accordingly, it has been decided to prepare a command cancelling multicast communication in the case where there has not been any response from the controlled device for a fixed period of time.

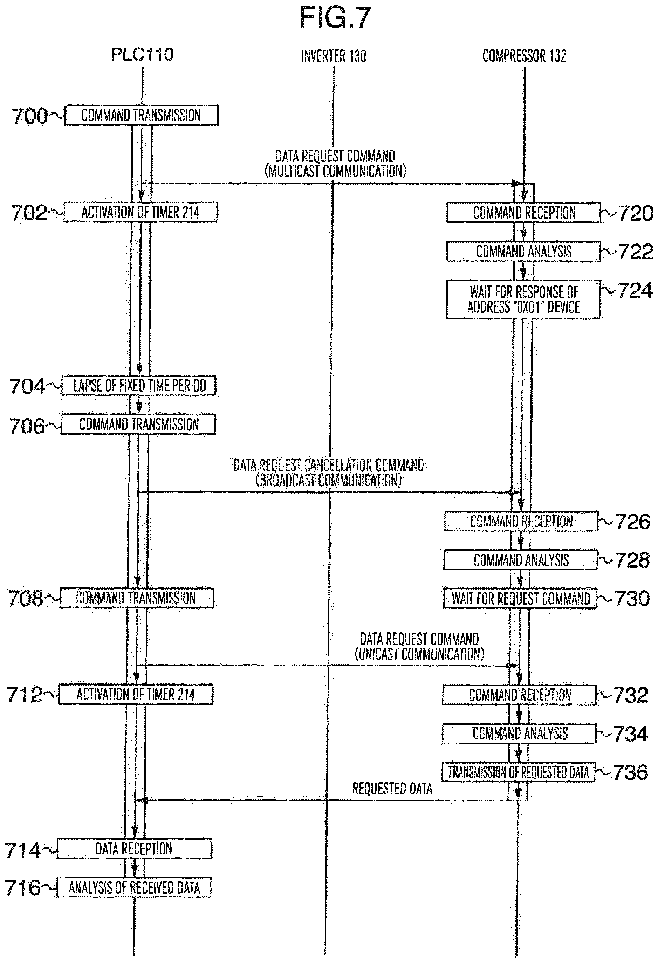

Fig. 7 is a diagram showing a sequence cancelling multicast communication. Further, it is assumed, in the present invention, that inverter 130 is unable to return a response due to malfunction.

PLC 110 transmits, via each of the I/O modules, a data request command setting "0xFE" in ADDRESS field 920, indicating that the present frame is multicast communication (Step 700).

PLC 110, after having transmitted the command, activates timer 214 in order to measure the timeout period with respect to the request (Step 702). The timeout value set in timer 214 is as stated above.

If timer 214 times out and PLC 110 confirms that there is not transmitted a response from a controlled device having address "0x01", PLC 110 transmits, by broadcast communication, a command (a data request cancellation command) cancelling the previously transmitted data request command (Step 704 and Step 706).

Compressor 132, having received the data request command, is awaiting a response from a device having address "0x01 ", but if, in the midst of awaiting the same response, it receives a data request cancellation command, it again switches over to a state of awaiting a request from PLC 110 (Step 720, Step 722, Step 724, Step 726, Step 728, and Step 730).

PLC 110, having transmitted the data request cancellation command, judges that a controlled device having address "0x01" is malfunctioning and transmits a data request command by unicast communication to compressor 132 having address "0x02" (Step 708).

PLC 110, after having transmitted the command, activates timer 214 in order to measure the timeout period with respect to the request (Step 712).

Hereafter, since the procedure is the same as for the unicast communication described in Fig. 6, a description thereof will be omitted (Step 714, Step 716, Step 732, Step 734, and Step 736).

This concludes the description related to a sequence cancelling the multicast communication. Further, in the case where a malfunctioning device is detected, there may be carried out a reallocation of addresses.

Fig. 8 is a diagram showing a sequence that is compatible even in the case where a malfunctioning device is present, without cancelling the multicast communication like in Fig. 7.

PLC 110 transmits, via each of the I/O modules, a data request command setting "0xFE" in ADDRESS field 920 to indicate that the present frame is multicast communication (Step 800).

Compressor 132, having received the command, analyzes the command utilizing message analysis part 256, confirms that there is a need to await a response to be transmitted by a controlled device having address "0x01" from the fact that address "OxFE", indicating multicast communication, is set in ADDRESS field 920, that the same command is a data request as well as that its own address is "0x02" and, after activating timer 254, waits for the response to be transmitted (Step 810, Step 812, Step 814, and Step 816). Here, the timeout value set in timer 254 is a prescribed value set in advance. It is preferable that, in each of the controlled devices, a different timeout value, corresponding to the address of the same device, be set in timer 254. E.g., the smallest timeout value is set for the controlled device having the lowest value as an address and as the address values become higher, the timeout values set in the controlled devices are set to become greater. Also, the timeout value set in timer 254 of each of the concerned controlled devices may be set to become greater than the sum value of response times 305 of the controlled devices having addresses with values that are lower than that of the address of the concerned controlled device.

If, after waiting for a fixed period of time, timer 254 times out and it is confirmed that there is no response from a controlled device having address "0x01 ", it is judged that the controlled device having address "0x01" is malfunctioning and the requested data are replied and transmitted (Step 818 and Step 820).

PLC 110, having received the response from compressor 132, analyzes the received data utilizing message analysis function 244, detects that inverter 130 is malfunctioning, and carries out address reallocation and the like (Step 802 and Step 804).

By the foregoing, what is concerned is a method capable of carrying out multicast communication even in the case where a malfunctioning device is present, without cancelling the multicast communication. Further, regarding the time of waiting for a response of address "0x01", it is assumed to have it set in advance.

In the foregoing, an embodiment has been described in concrete terms, but the invention is not one limited to the aforementioned disclosure and it goes without saying that, various modifications are possible.

### REFERENCE SIGNS LIST

- 100: PC (Personal Computer)
- 110: PLC (Programmable Logic Controller)
- 112: Bus
- 120: CPU Module
- 122: I/O Module 1
- 124: I/O Module 2
- 126: I/O Module N
- 130: Inverter
- 132: Compressor
- 134: Servo Motor
- 210: Module Hardware
- 212: CPU
- 214: Timer
- 216: Communication Interface
- 218: I/O Interface
- 220: Storage Device
- 222: Device Management Table
- 224: Sequence Program
- 230: OS
- 240: Device Control Application
- 242: Message Analysis Function
- 244: Message Conversion Function
- 240: CPU
- 242: I/O Interface
- 244: Input/Output Data Buffer
- 246: Input/Output Interface
- 250: Communication Module
- 252: Input/Output Interface
- 254: Timer
- 256: Message Analysis Part
- 258: Message Generation Part
- 260: Control Module

## Claims

1. A communication system having a controller (110) and a plurality of controlled devices (130, 132, 134) in communication with said controller, **characterized in that**:
consecutive addresses are allocated respectively to each of said plurality of controlled devices;
said controller is configured
to transmit a request of device information to each of said plurality of
controlled devices after switching on a power supply, and in response
to receive addresses of said controlled devices, device information including information indicating whether it is applicable to multicast communication, from said controlled devices, said device information received from each of said controlled devices being stored in a device management table (222),
to check that the addresses of the controlled devices capable of multicast communication are consecutive by referring to the device management table, and if the addresses are not consecutive, to transmit an address modification request to devices for which an address modification is required in order for the addresses to become consecutive,
to transmit, after transmitting said address modification request, a data request including a particular value indicating multicast communication to the plurality of controlled devices managed by the particular value among the plurality of controlled devices, wherein
each of the controlled devices, other than a controlled device which firstly transmitted a response to said data request is configured to check a content of the response to the data request from other controlled devices when receiving the data request, to check an address of the controlled device which transmits the response included in the response, and, if the value of the address immediately precedes a value of its own address, to transmit a response including its own address to the controller.

2. The communication system according to Claim 1, wherein:
said plurality of controlled devices (130, 132, 134) are respectively configured to detect a response transmitted by multicast with respect to said request by another controlled device and, by determining the transmission source of the controlled device, of said response on the basis of the contents of said response, to judge the timing with which to transmit by multicast a response with respect to said request.

3. The communication system according to Claim 2, wherein:
addresses with consecutive values are allocated to said plurality of controlled devices (130, 132, 134) and each of said plurality of controlled devices is configured to determine, from the contents of said response transmitted by multicast by the other controlled device, the address of the transmission source controlled device of said response and, in the case where the value of said address immediately precedes the value of its own address, to transmit by multicast a response with respect to said request.

4. The communication system according to Claim 2, wherein:
said controller (110), in the case of not receiving a response with respect to said request within a prescribed time after transmission of said request, is configured to transmit a command of cancellation of said request.

5. The communication system according to Claim 2, wherein:
each of said plurality of controlled devices (130, 132, 134), in the case of not receiving a response, with respect to said request, of the other controlled device within a prescribed time after receiving said request, is configured to transmit by multicast a response to said request without waiting for said other controlled device to transmit said response.

6. A controller (110) effectuating communication with a plurality of controlled devices (130, 132, 134), comprising:
I/O modules respectively connected with said plurality of controlled devices (130. 132, 134) and
a processor module controlling communication with said plurality of controlled devices (130, 132, 134); and said processor module being configured so that said processor module, after having checked by means of communication with each of the controlled devices via said I/O modules whether addresses are allocated according to a prescribed rule to each of said plurality of controlled devices,
transmits a request of device information to each of said plurality of controlled devices, after switching on a power supply,
receives addresses of said controlled devices, device information including information indicating whether it is applicable to multicast communication, from each of said controlled devices, said device information received from each of said controlled devices being stored in a device management table (222),
checks that the addresses of the controlled devices capable of multicast communication are consecutive by referring to the device management table, and, if the addresses are not consecutive, transmits an address modification request to devices for which an address modification is required in order for the addresses to become consecutive,
transmits, after transmitting said address modification request, a data request including a particular value indicating multicast communication to the plurality of controlled devices managed by the particular value among the plurality of controlled devices.

7. The controller (110) according to Claim 6, wherein:
said processor module, in the case of not receiving a response with respect to said request within a prescribed time after transmission of said request, transmits a command of cancellation of said request.

8. A controlled device configured to receive a request from a controller connected with a plurality of other controlled devices (130, 132, 134) and to return a response hereto, having an input/output interface communicating with said controller and a message generation part generating responses returned to said controller;
wherein addresses having consecutive values are allocated to said controlled device and said plurality of other controlled devices (130, 132, 134); and the controlled device is configured
to receive said request from said controller, to judge a timing with which said controlled device transmits said response according to a response transmission order determined between said plurality of other controlled devices according to said consecutive values; and
wherein said input/output interface is configured to transmit by multicast said response generated by means of said message generation part according to said timing, wherein
said input/output interface is configured to receive a response with respect to said request transmitted by multicast by another controlled device; and
said controlled device, by determining the transmission source of the controlled device of said response on the basis of the contents of said response, is configured to judge the timing of multicasting said response, and wherein
if said input/output interface receives said response transmitted by multicast by another controlled device, said controlled device is configured to determine the address of the transmission source of the controlled device of said response and, in the case where the value of said address immediately precedes the value of its own address, is configured to transmit by multicast a response with respect to said request via said input/output interface.

9. The controlled device according to Claim 8 that, in the case of not receiving a response, with respect to said request, of the other controlled device within a prescribed time after receiving said request, transmits by multicast a response to said request without waiting for said other controlled device to transmit said response.

## Patentansprüche

1. Kommunikationssystem, das eine Steuerung (110) und eine Vielzahl von gesteuerten Vorrichtungen (130, 132, 134), die in Kommunikation mit der Steuerung stehen, umfasst, **dadurch gekennzeichnet, dass**
jeder der Vielzahl von gesteuerten Vorrichtungen jeweils aufeinanderfolgende Adressen zugewiesen sind;
die Steuerung konfiguriert ist, um
nach dem Einschalten einer Leistungsversorgung an jede der Vielzahl von gesteuerten Vorrichtungen eine Anfrage in Bezug auf Vorrichtungsinformationen zu übertragen und als Antwort darauf von den gesteuerten Vorrichtungen Adressen der gesteuerten Vorrichtungen zu empfangen, wobei die Vorrichtungsinformationen anzeigen, ob diese auf Multicastkommunikation anwendbar sind, wobei die von jeder der gesteuerten Vorrichtungen empfangenen Vorrichtungsinformationen in einer Vorrichtungsverwaltungstabelle (222) gespeichert sind,
unter Heranziehung der Vorrichtungsverwaltungstabelle zu überprüfen, ob die Adressen der zur Multicastkommunikation fähigen gesteuerten Vorrichtungen aufeinanderfolgend sind, und, wenn die Adressen nicht aufeinanderfolgend sind, an die Vorrichtungen, für die eine Adressänderung erforderlich ist, eine Adressänderungsanfrage zu übertragen, damit die Adressen aufeinanderfolgend werden,
nach dem Übertragen der Adressänderungsanfrage eine Datenanfrage, die einen bestimmten Wert umfasst, zu übertragen, der der Vielzahl von gesteuerten Vorrichtungen, die durch den bestimmten Wert verwaltet werden, aus der Vielzahl von gesteuerten Vorrichtungen Multicastkommunikation anzeigt, wobei
jede der gesteuerten Vorrichtungen, die nicht eine gesteuerte Vorrichtung ist, die zuerst eine Antwort auf die Datenanfrage übertragen hat, konfiguriert ist, bei Empfangen der Datenanfrage den Inhalt der Antwort auf die Datenanfrage von weiteren gesteuerten Vorrichtungen zu überprüfen, um eine in der Antwort enthaltene Adresse der gesteuerten Vorrichtung, die die Antwort überträgt, zu überprüfen, und, wenn der Wert der Adresse einem Wert ihrer eigenen Adresse unmittelbar vorausgeht, eine Antwort, die ihre eigene Adresse umfasst, an die Steuerung zu übertragen.

2. Kommunikationssystem nach Anspruch 1, wobei
die Vielzahl von gesteuerten Vorrichtungen (130, 132, 134) jeweils konfiguriert ist, eine über Multicast übertragene Antwort in Bezug auf die Anfrage einer weiteren gesteuerten Vorrichtung zu detektieren und durch Bestimmen der Übertragungsquelle der Antwort der gesteuerten Vorrichtung basierend auf dem Inhalt der Antwort den Zeitpunkt zu beurteilen, an dem eine Antwort in Bezug auf die Anfrage über Multicast zu übertragen ist.

3. Kommunikationssystem nach Anspruch 2, wobei
der Vielzahl von gesteuerten Vorrichtungen (130, 132, 134) Adressen mit aufeinanderfolgenden Werten zugewiesen werden und jede der Vielzahl von gesteuerten Vorrichtungen konfiguriert ist, basierend auf dem Inhalt der von der weiteren gesteuerten Vorrichtung über Multicast übertragenen Antwort die Adresse der Übertragungsquelle der Antwort der gesteuerten Vorrichtung zu bestimmen und, falls der Wert der Adresse dem Wert ihrer eigenen Adresse unmittelbar vorausgeht, eine Antwort in Bezug auf die Anfrage über Multicast zu übertragen.

4. Kommunikationssystem nach Anspruch 2, wobei
die Steuerung (110), falls sie innerhalb einer vorgeschriebenen Zeitspanne nach Übertragung der Anfrage keine Antwort in Bezug auf die Anfrage erhält, konfiguriert ist, einen Befehl zur Löschung der Anfrage zu übertragen.

5. Kommunikationssystem nach Anspruch 2, wobei
jede der Vielzahl von gesteuerten Vorrichtungen (130, 132, 134), falls sie innerhalb einer vorgeschriebenen Zeitspanne nach Empfangen der Anfrage von der weiteren gesteuerten Vorrichtung keine Antwort in Bezug auf die Anfrage erhält, konfiguriert ist, über Multicast eine Antwort auf die Anfrage zu übertragen, ohne abzuwarten, dass die weitere gesteuerte Vorrichtung die Antwort überträgt.

6. Steuerung (110), die Kommunikation mit einer Vielzahl von gesteuerten Vorrichtungen (130, 132, 134) durchführt und Folgendes umfasst:
I/O-Module, die jeweils mit der Vielzahl von gesteuerten Vorrichtungen (130, 132, 134) verbunden sind, und
ein Prozessormodul, das die Kommunikation mit der Vielzahl von gesteuerten Vorrichtungen (130, 132, 134) steuert; und wobei das Prozessormodul so konfiguriert ist, dass das Prozessormodul, nachdem es durch Kommunikation mit jeder der gesteuerten Vorrichtung über die I/O-Module überprüft hat, ob jeder der Vielzahl von gesteuerten Vorrichtungen Adressen gemäß einer vorgeschriebenen Regel zugewiesen werden,
nach Einschalten einer Leistungsversorgung an jede der Vielzahl von gesteuerten Vorrichtungen eine Anfrage in Bezug auf Vorrichtungsinformationen überträgt,
von jeder der gesteuerten Vorrichtungen Adressen der gesteuerten Vorrichtungen empfängt, wobei die Vorrichtungsinformationen Informationen umfassen, die anzeigen, ob diese auf Multicastkommunikation anwendbar sind, wobei die von jeder der gesteuerten Vorrichtungen empfangenen Vorrichtungsinformationen in einer Vorrichtungsverwaltungstabelle (222) gespeichert sind,
unter Heranziehung der Vorrichtungsverwaltungstabelle überprüft, ob die Adressen der zur Multicastkommunikation fähigen gesteuerten Vorrichtungen aufeinanderfolgend sind, und, wenn die Adressen nicht aufeinanderfolgend sind, an die Vorrichtungen, für die eine Adressänderung erforderlich ist, eine Adressänderungsanfrage überträgt, damit die Adressen aufeinanderfolgend werden,
nach dem Übertragen der Adressänderungsanfrage eine Datenanfrage, die einen bestimmten Wert umfasst, überträgt, der der Vielzahl von gesteuerten Vorrichtungen, die durch den bestimmten Wert verwaltet werden, aus der Vielzahl von gesteuerten Vorrichtungen Multicastkommunikation anzeigt.

7. Steuerung (110) nach Anspruch 6, wobei
das Prozessormodul, falls sie innerhalb einer vorgeschriebenen Zeitspanne nach Übertragung der Anfrage keine Antwort in Bezug auf die Anfrage erhält, einen Befehl zur Löschung der Anfrage überträgt.

8. Gesteuerte Vorrichtung, die konfiguriert ist, eine Anfrage von einer Steuerung zu empfangen, die mit einer Vielzahl von weiteren gesteuerten Vorrichtungen (130, 132, 134) verbunden ist, und eine Antwort darauf zurückzusenden, und eine Eingabe/Ausgabe-Schnittstelle, die mit der Steuerung kommuniziert, und ein Nachrichtenerzeugungselement aufweist, das die an die Steuerung zurückgesendeten Antworten erzeugt;
wobei der gesteuerten Vorrichtung und der Vielzahl von weiteren gesteuerten Vorrichtungen (130, 132, 134) Adressen mit aufeinanderfolgenden Werten zugewiesen werden; und die gesteuerte Vorrichtung konfiguriert ist,
von der Steuerung die Anfrage zu empfangen, um gemäß einem Antwortübertragungsbefehl, der zwischen der Vielzahl von weiteren gesteuerten Vorrichtungen entsprechend den aufeinanderfolgenden Werten bestimmt ist, einen Zeitpunkt festzulegen, an dem die gesteuerte Vorrichtung die Antwort überträgt; und
wobei die Eingabe/Ausgabe-Schnittstelle konfiguriert ist, die Antwort, die durch das Nachrichtenerzeugungselement erzeugt wurde, gemäß dem Zeitpunkt über Multicast zu übertragen, wobei
die Eingabe/Ausgabe-Schnittstelle konfiguriert ist, in Bezug auf die Anfrage eine von einer weiteren gesteuerten Vorrichtung über Multicast übertragene Antwort zu empfangen; und wobei
die gesteuerte Vorrichtung konfiguriert ist, durch Bestimmen der Übertragungsquelle der Antwort der gesteuerten Vorrichtung basierend auf dem Inhalt der Antwort den Zeitpunkt für das Multicasting der Antwort zu beurteilen und wobei
wenn die Eingabe/Ausgabe-Schnittstelle die von einer weiteren gesteuerten Vorrichtung über Multicast übertragene Antwort empfängt, die gesteuerte Vorrichtung konfiguriert ist, die Adresse der Übertragungsquelle der Antwort der gesteuerten Vorrichtung zu bestimmen und, falls der Wert der Adresse dem Wert ihrer eigenen Adresse unmittelbar vorausgeht, konfiguriert ist, über die Eingabe/Ausgabe-Schnittstelle eine Antwort in Bezug auf die Anfrage über Multicast zu übertragen.

9. Gesteuerte Vorrichtung nach Anspruch 8, die, falls sie innerhalb einer vorgeschriebenen Zeitspanne nach Empfangen der Anfrage von der weiteren gesteuerten Vorrichtung keine Antwort in Bezug auf die Anfrage empfängt, über Multicast eine Antwort auf die Anfrage überträgt, ohne abzuwarten, dass die weitere gesteuerte Vorrichtung die Antwort überträgt.

## Revendications

1. Système de communication présentant un contrôleur (110), et une pluralité de dispositifs commandés (130, 132, 134) qui sont en communication avec ledit contrôleur, **caractérisé en ce que** :
des adresses consécutives sont respectivement affectées à chaque dispositif de ladite pluralité de dispositifs commandés ;
ledit contrôleur est configuré de manière à :
transmettre une demande d'informations de dispositifs à chaque dispositif de ladite pluralité de dispositifs commandés, après la mise sous tension d'une alimentation électrique, et en réponse
recevoir des adresses desdits dispositifs commandés, dans lequel les informations de dispositifs incluent des informations indiquant s'ils sont applicables à une communication par multidiffusion, en provenance desdits dispositifs commandés, lesdites informations de dispositifs reçues en provenance de chacun desdits dispositifs commandés étant stockées dans une table de gestion de dispositifs (222) ;
vérifier que les adresses des dispositifs commandés aptes à une communication par multidiffusion sont consécutives, en faisant référence à la table de gestion de dispositifs, et si les adresses ne sont pas consécutives, transmettre une demande de modification d'adresse à des dispositifs pour lesquels une modification d'adresse est nécessaire pour que les adresses deviennent consécutives ; et
transmettre, suite à la transmission de ladite demande de modification d'adresse, une demande de données incluant une valeur particulière indiquant une communication par multidiffusion, à la pluralité de dispositifs commandés gérés par la valeur particulière parmi la pluralité de dispositifs commandés, dans lequel :
chacun des dispositifs commandés, autre qu'un dispositif commandé qui a transmis dans un premier temps une réponse à ladite demande de données, est configuré de manière à vérifier un contenu de la réponse à la demande de données en provenance d'autres dispositifs commandés, lors de la réception de la demande de données, à vérifier une adresse du dispositif commandé qui transmet la réponse incluse dans la réponse, et, si la valeur de l'adresse précède immédiatement une valeur de sa propre adresse, à transmettre une réponse incluant sa propre adresse au contrôleur.

2. Système de communication selon la revendication 1, dans lequel :
les dispositifs de ladite pluralité de dispositifs commandés (130, 132, 134) sont respectivement configurés de manière à détecter une réponse, transmise par multidiffusion relativement à ladite demande, par un autre dispositif commandé et, en déterminant la source de transmission du dispositif commandé, de ladite réponse, sur la base des contenus de ladite réponse, à évaluer la temporisation avec laquelle transmettre par multidiffusion une réponse relativement à ladite demande.

3. Système de communication selon la revendication 2, dans lequel :
des adresses avec des valeurs consécutives sont affectées à ladite pluralité de dispositifs commandés (130, 132, 134) et chaque dispositif de ladite pluralité de dispositifs commandés est configuré de manière à déterminer, à partir des contenus de ladite réponse transmise par multidiffusion par l'autre dispositif commandé, l'adresse de la source de transmission du dispositif commandé de ladite réponse et, dans le cas où la valeur de ladite adresse précède immédiatement la valeur de sa propre adresse, à transmettre par multidiffusion une réponse relativement à ladite demande.

4. Système de communication selon la revendication 2, dans lequel :
ledit contrôleur (110), dans le cas où une réponse n'est pas reçue relativement à ladite demande dans un temps prescrit après la transmission de ladite demande, est configuré de manière à transmettre une commande d'annulation de ladite demande.

5. Système de communication selon la revendication 2, dans lequel :
chaque dispositif de ladite pluralité de dispositifs commandés (130, 132, 134), dans le cas où une réponse n'est pas reçue, relativement à ladite demande, de l'autre dispositif commandé, dans un temps prescrit après la réception de ladite demande, est configuré de manière à transmettre par multidiffusion une réponse à ladite demande sans attendre que ledit autre dispositif commandé transmette ladite réponse.

6. Contrôleur (110) mettant en œuvre une communication avec une pluralité de dispositifs commandés (130, 132, 134), comprenant :
des modules d'entrée/sortie, I/O, respectivement connectés à ladite pluralité de dispositifs commandés (130, 132, 134) ; et
un module de processeur commandant la communication avec ladite pluralité de dispositifs commandés (130, 132, 134) ; et dans lequel ledit module de processeur est configuré de sorte que ledit module de processeur, après avoir vérifié, au moyen d'une communication avec chacun des dispositifs commandés, par l'intermédiaire desdits modules I/O, si des adresses sont affectées selon une règle prescrite à chaque dispositif de ladite pluralité de dispositifs commandés :
transmet une demande d'informations de dispositifs à chaque dispositif de ladite pluralité de dispositifs commandés, après la mise sous tension d'une alimentation électrique,
reçoit des adresses desdits dispositifs commandés, dans lequel les informations de dispositifs incluent des informations indiquant s'ils sont applicables à une communication par multidiffusion, en provenance de chacun desdits dispositifs commandés, lesdites informations de dispositifs reçues en provenance de chacun desdits dispositifs commandés étant stockées dans une table de gestion de dispositifs (222) ;
vérifie que les adresses des dispositifs commandés aptes à une communication par multidiffusion sont consécutives, en faisant référence à la table de gestion de dispositifs, et si les adresses ne sont pas consécutives, transmet une demande de modification d'adresse à des dispositifs pour lesquels une modification d'adresse est nécessaire pour que les adresses deviennent consécutives ; et
transmet, suite à la transmission de ladite demande de modification d'adresse, une demande de données incluant une valeur particulière indiquant une communication par multidiffusion, à la pluralité de dispositifs commandés gérés par la valeur particulière parmi la pluralité de dispositifs commandés.

7. Contrôleur (110) selon la revendication 6, dans lequel :
ledit module de processeur, dans le cas où aucune réponse n'est reçue relativement à ladite demande dans un temps prescrit après la transmission de ladite demande, transmet une commande d'annulation de ladite demande.

8. Dispositif commandé configuré de manière à recevoir une demande en provenance d'un contrôleur connecté à une pluralité d'autres dispositifs commandés (130, 132, 134), et à renvoyer une réponse à celui-ci, présentant une interface d'entrée/sortie communiquant avec ledit contrôleur et une partie de génération de messages générant des réponses renvoyées audit contrôleur ;
dans lequel des adresses présentant des valeurs consécutives sont affectées audit dispositif commandé et à ladite pluralité d'autres dispositifs commandés (130, 132, 134) ; et dans lequel le dispositif commandé est configuré de manière à recevoir ladite demande en provenance dudit contrôleur, à évaluer une temporisation avec laquelle ledit dispositif commandé transmet ladite réponse, selon un ordre de transmission de réponse déterminé entre les dispositifs de ladite pluralité d'autres dispositifs commandés conformément auxdites valeurs consécutives ; et
dans lequel ladite interface d'entrée/sortie est configurée de manière à transmettre par multidiffusion ladite réponse générée au moyen de ladite partie de génération de messages selon ladite temporisation, dans lequel
ladite interface d'entrée/sortie est configurée de manière à recevoir une réponse relativement à ladite demande transmise par multidiffusion par un autre dispositif commandé ; et
ledit dispositif commandé, en déterminant la source de transmission du dispositif commandé de ladite réponse sur la base des contenus de ladite réponse, est configuré de manière à évaluer la temporisation de multidiffusion de ladite réponse, et dans lequel
si ladite interface d'entrée/sortie reçoit ladite réponse transmise par multidiffusion par un autre dispositif commandé, ledit dispositif commandé est configuré de manière à déterminer l'adresse de la source de transmission du dispositif commandé de ladite réponse et, dans le cas où la valeur de ladite adresse précède immédiatement la valeur de sa propre adresse, il est configuré de manière à transmettre par multidiffusion une réponse relativement à ladite demande par l'intermédiaire de ladite interface d'entrée/sortie.

9. Dispositif commandé selon la revendication 8, lequel, dans le cas où aucune réponse n'est reçue, relativement à ladite demande, de l'autre dispositif commandé, dans un temps prescrit après la réception de ladite demande, transmet par multidiffusion une réponse à ladite demande sans attendre que ledit autre dispositif commandé transmette ladite réponse.
